# FASCICULE DE BREVET EUROPEEN

(11) **EP 2 379 303 B1**
(45) Date de publication et mention de la délivrance du brevet: **13.02.2013**
(21) Numéro de dépôt: 09796764.0
(22) Date de dépôt: 01.12.2009
(51) Int. Cl.: B29C 49/48, B29C 49/64

(54) **PROCEDE ET DISPOSITIF DE FORMAGE DE RECIPIENTS AVEC REFROIDISSEMENT LOCALISE**
VERFAHREN UND VORRICHTUNG ZUR HERSTELLUNG VON BEHÄLTERN MIT LOKALISIERTER KÜHLUNG
METHOD AND DEVICE FOR FORMING CONTAINERS WITH LOCALIZED COOLING

(30) Priorité: 03.12.2008 FR 0806794
(43) Date de publication de la demande: 26.10.2011
(73) Titulaire: Sidel Participations, 76930 Octeville sur Mer (FR)
(72) Inventeur: CHOMEL, Nicolas, F-76930 Octeville sur Mer (FR); AUVRAY, Sylvain, F-76930 Octeville sur Mer (FR); LANGLOIS, Jean-Christophe, F-76930 Octeville sur Mer (FR); BRIARD, Arnaud, F-76930 Octeville sur Mer (FR)
(74) Mandataire: Demulsant, Xavier
(86) Numéro de dépôt international: PCT/FR2009/001363
(87) Numéro de publication internationale: WO 2010/063899

(56) Documents cités:
- EP-A- 0 888 864
- EP-A- 1 116 572
- EP-A- 1 314 535
- WO-A-2007/020346
- FR-A- 2 591 142
- GB-A- 1 493 639

## Description

L'invention a trait au formage des récipients à partir d'ébauches en matière thermoplastique, et plus précisément au formage des récipients munis de réserves en creux telles que des poignées intégrées.

Rappelons que la fabrication des récipients comprend généralement une opération de soufflage qui se déroule dans un moule dont la paroi définit une cavité au sein de laquelle est introduite l'ébauche, cette dernière venant, au cours du soufflage, épouser la paroi sous l'effet de la pression gazeuse élevée qui règne dans l'ébauche, préalablement chauffée de manière à permettre sa déformation plastique.

Certains récipients peuvent être munis de réserves en creux formées en saillie vers l'intérieur du récipient et réalisées dans un but esthétique (par ex. création de galbes), structurel (par ex. réalisation de panneaux destinés à absorber la déformation du récipient lors d'un remplissage à chaud) ou fonctionnel (réalisation d'une poignée de préhension du récipient).

Il existe plusieurs techniques pour former une réserve en creux sur un récipient.

Une première technique consiste à employer un moule muni d'un insert mobile initialement escamoté dans la paroi du moule et déployé en présence du récipient en cours de formation dans le moule pour repousser la matière lorsque celle-ci atteint la paroi, comme cela est illustré dans les demandes de brevet européen EP 1 922 256 (SIDEL) ou EP 346 518 (TOAGOSEI).

Un inconvénient de cette technique est lié à la régulation thermique du moule, à laquelle on recourt généralement pour initier le refroidissement du récipient avant même son éjection du moule.

En effet, ce refroidissement de la matière rend plus difficile sa déformation lorsque l'insert est déployé. En particulier, il peut arriver que la matière, insuffisamment déformée, n'épouse pas complètement la surface de l'insert. Il peut en résulter certains défauts d'aspects qui justifient la mise au rebut du récipient.

Une deuxième technique consiste à former un récipient intermédiaire muni d'une excroissance en saillie vers l'extérieur du récipient, au moyen d'un moule muni d'un évidement pour former cette excroissance lors du soufflage du récipient. Le récipient intermédiaire ainsi formé est alors sorti du moule. Une étape supplémentaire consiste ensuite, par exemple au moyen d'une tige coulissante, à repousser l'excroissance pour la retourner autour d'une zone d'articulation de sorte à former une réserve en creux en saillie vers l'intérieur du récipient. Cette technique est notamment illustrée dans la demande internationale WO 2006/014331.

Cette technique remédie dans une certaine mesure aux inconvénients précités de la première technique décrite ci-dessus, car pour l'essentiel la réserve en creux est formée en même temps que le reste du récipient, ce qui facilite la déformation de la matière. Toutefois, elle ne va pas non plus sans inconvénients. En effet, le récipient intermédiaire subit, d'abord au contact du moule et ensuite à la sortie de celui-ci, un refroidissement qui provoque sa rigidification, laquelle peut rendre délicate l'opération de retournement de l'excroissance, en provoquant notamment, dans certains cas, l'apparition d'amorces de rupture dans la zone d'articulation.

L'invention vise notamment à remédier aux inconvénients des techniques antérieures, en proposant une solution permettant de faciliter le formage de récipients munis de réserves en creux.

À cet effet, l'invention propose, en premier lieu, un procédé de formage, dans un moule muni d'une paroi formant une cavité, d'un récipient à partir d'un récipient intermédiaire comprenant au moins une excroissance latérale en saillie vers l'extérieur du récipient, qui comprend :
- Une opération de boxage consistant à repousser l'excroissance latérale pour former, par retournement autour d'une zone d'articulation, une réserve en creux en saillie vers l'intérieur du récipient ;
- une opération de refroidissement local consistant, après retournement de l'excroissance, à balayer ladite zone d'articulation au moyen d'une circulation de fluide.

En deuxième lieu, l'invention propose un dispositif pour le formage d'un récipient à partir d'un récipient intermédiaire comprenant au moins une excroissance latérale en saillie vers l'extérieur du récipient, ce dispositif comprenant :
- Un moule muni d'une paroi définissant une cavité ;
- Un insert de boxage monté mobile par rapport au moule entre une position rétractée dans laquelle l'insert est escamoté dans la paroi, et une position sortie dans laquelle l'insert s'étend en saillie par rapport à la paroi, vers l'intérieur de la cavité, pour repousser, sur le récipient intermédiaire, l'excroissance latérale et former, par retournement autour d'une zone d'articulation, une réserve en creux vers l'intérieur du récipient ;
- une gorge périphérique formée sur l'insert et qui, en position sortie de l'insert, se trouve en regard de ladite zone d'articulation ;
- des moyens d'injection d'un fluide dans la gorge périphérique ;
- des moyens d'extraction du fluide de la gorge périphérique.

De la sorte, une fois effectué le retournement de l'excroissance, c'est-à-dire une fois formée la réserve en creux, la zone d'articulation est immédiatement rigidifiée, ce qui évite que d'éventuelles contraintes auxquelles serait soumis le récipient soit lors du démoulage, soit ultérieurement, ne viennent le déformer au niveau de la réserve en creux. Cet avantage est particulièrement intéressant lorsque le récipient est muni de deux réserves en creux symétriques, formant conjointement une poignée. Dans ce cas en effet, le fait de minimiser les éventuelles déformations permet de garantir une bonne tenue de la poignée lors et à l'issue du démoulage.

D'autres objets et avantages de l'invention apparaîtront à la lumière de la description faite ci-après en référence aux dessins annexés dans lesquels :
- la figure 1 est une vue en perspective éclatée montrant une unité de formage de récipients équipée d'un dispositif conforme à l'invention ;
- la figure 2 est une vue transversale en coupe de l'unité de formage de la figure 1, montrée dans une configuration ouverte lors du chargement d'un récipient intermédiaire ;

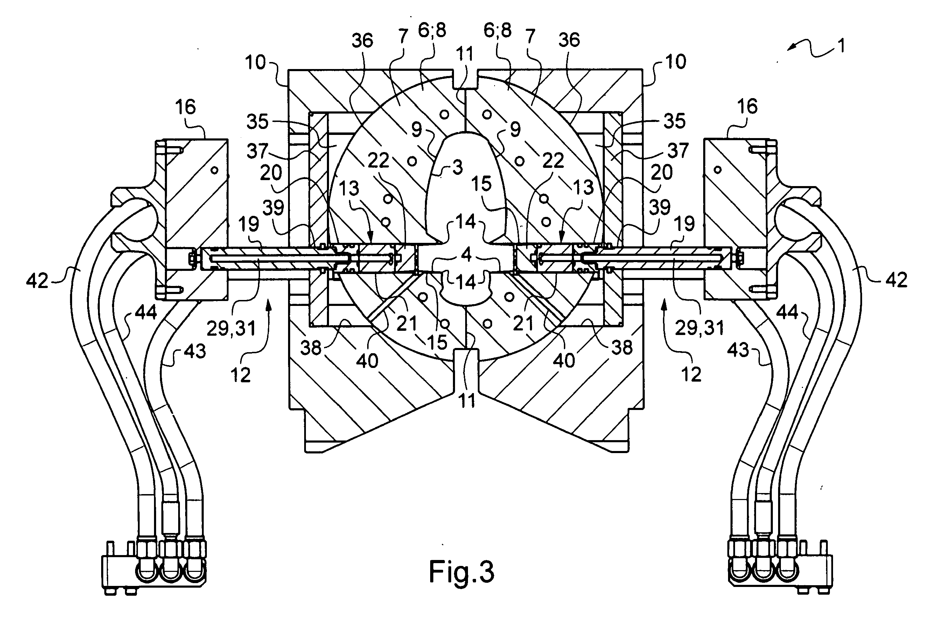

- la figure 3 est une vue similaire à la figure 2, montrant l'unité de formage dans une configuration fermée après chargement du récipient intermédiaire, et avant boxage de celui-ci ;
- la figure 4 est une vue similaire aux figures 2 et 3, montrant l'unité de formage dans une configuration de boxage du récipient ;
- la figure 5 est une vue partielle en coupe, faite dans un autre plan de coupe, et montrant un détail de l'unité de formage ;
- la figure 6 est une vue d'un détail de la figure 4, illustrant à échelle agrandie le boxage du récipient ;
- la figure 7 est une vue en perspective montrant un module de boxage équipant l'unité de formage illustrée sur les figures précédentes, et conçu pour réaliser le boxage des récipients ;
- la figure 8 est une vue frontale en coupe du module de boxage de la figure 7, faite dans la platine de celui-ci ;
- la figure 9 est une vue partielle latérale en coupe montrant l'insert équipant le module des figures 7 et 8, suivant le plan de coupe IX-IX de la figure 8 ;
- la figure 10 est une vue en coupe de dessus montrant l'insert, suivant le plan de coupe X-X de la figure 9.

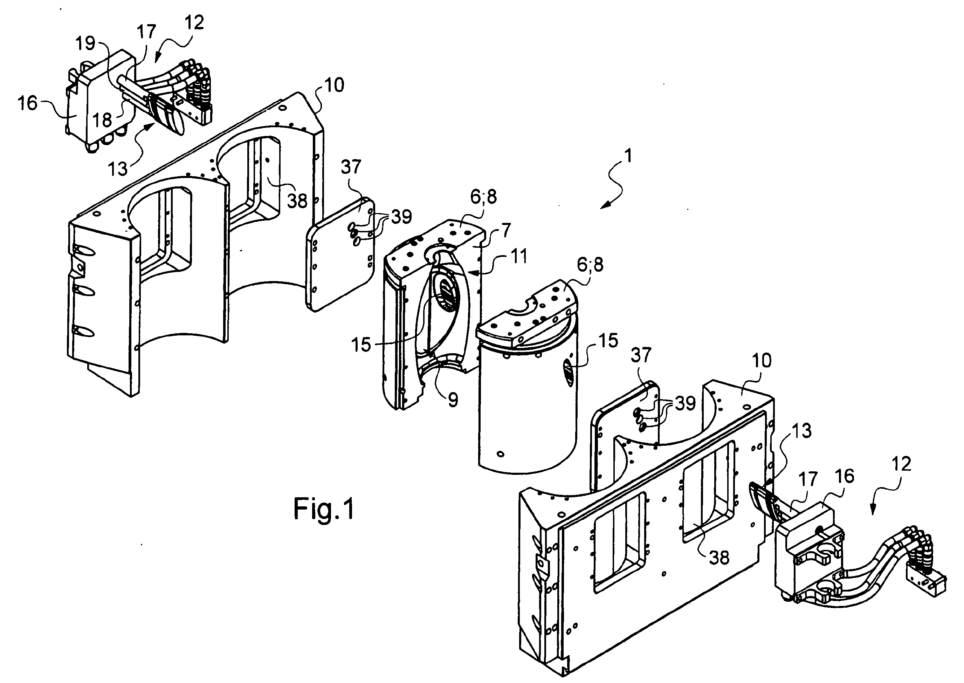

Sur la figure 1 est partiellement représentée une unité **1** de formage pour une machine de fabrication de récipients **2** à partir d'ébauches **3** en matière plastique, tel que PET (Polyéthylène téréphtalate). Le terme « ébauche » est employé ici pour désigner des récipients intermédiaires ayant subi une première série d'opérations dans un premier moule (par exemple un présoufflage) et destinés à subir une seconde série d'opérations dans un deuxième moule (par exemple un soufflage).

Le terme « formage » est employé ici pour désigner une opération de finition. En l'occurrence, l'unité **1** de formage ici représentée est configurée pour réaliser une opération de boxage sur des récipients **3** intermédiaires ayant subi des opérations de présoufflage et de soufflage. A l'issue de ces opérations, chaque récipient intermédiaire présente sur son corps deux excroissances **4** symétriques dont le boxage provoque le retournement vers l'intérieur du récipient **2,** et la formation subséquente de deux réserves **5** en creux constituant ensemble une poignée de préhension du récipient **2.**

Comme cela est représenté sur la figure 1, l'unité **1** de formage est du type linéaire et comprend une pluralité de moules **6** munis chacun d'une paroi **7** définissant une cavité destinée à recevoir une ébauche.

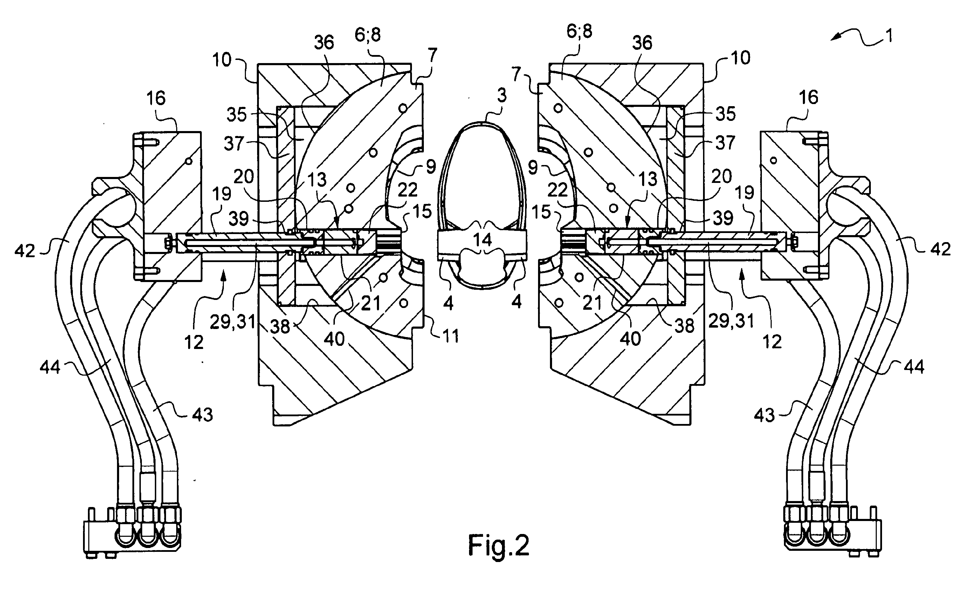

Plus précisément, chaque moule **6** comprend deux demi-moules **8,** munis chacun d'une demi-cavité **9.** Les demi-moules **8** sont montés en regard l'un de l'autre sur deux porte-moules **10** mobiles en translation horizontale par rapport à un bâti fixe (non représenté) de l'unité **1** de formage, suivant une direction transversale perpendiculaire à une direction longitudinale d'amenée des ébauches, entre :
- une position fermée dans laquelle les porte-moules **10** sont rapprochés, les demi-moules **8** étant en contact mutuel par un plan de joint **11** et les demi-cavités **9** formant conjointement la cavité du moule **6 ;**
- une position ouverte (illustrée sur la figure 2) dans laquelle les porte-moules **10** sont écartés l'un de l'autre pour permettre l'évacuation des récipients **2** et le chargement des ébauches **3.**

Pour une description plus précise de la cinématique, et d'une forme possible de réalisation d'un système de commande d'ouverture et de fermeture des moules **6,** on pourra se reporter à la demande de brevet européen n°EP 1 924 421 au nom de la demanderesse.

L'unité 1 de formage comprend en outre au moins un dispositif **12** de boxage. Ce dispositif **12** comprend un insert **13** de boxage prévu pour repousser la paroi de l'ébauche **3** au niveau de chaque excroissance **4** à la manière d'un poinçon, de sorte à former, par retournement autour d'une zone d'articulation ou charnière **14**, une réserve 5 en creux en saillie vers l'intérieur du récipient **2**.

En l'occurrence, l'unité **1** de formage, configurée pour accueillir deux ébauches **3**, comprend deux dispositifs **12** de boxage montés en vis-à-vis, prévus pour effectuer un boxage simultané de l'ébauche **3** de part et d'autre du plan de joint **11** et réaliser deux réserves **5** en creux symétriques formant ensemble une poignée. Chaque dispositif **12** de boxage comprend par conséquent deux inserts **13** de boxage montés en parallèle et se déplaçant simultanément.

Chaque insert **13** est monté mobile en translation par rapport au demi-moule **8** correspondant, entre une position rétractée dans laquelle l'insert **13** est escamoté dans la paroi **7**, et une position sortie dans laquelle l'insert **13** s'étend en saillie par rapport à la paroi **7**.

Afin de permettre le passage et le mouvement de l'insert **13,** chaque demi-moule **8** est muni d'un évidement **15** pratiqué transversalement et dont le contour correspond, au jeu de fonctionnement près, à la surface balayée par l'insert **13.**

Le dispositif **12** de boxage est conçu pour permettre un montage et un démontage rapide des inserts **13,** de sorte à permettre l'interchangeabilité des inserts **13** soit pour procéder à une réparation, soit dans le cadre de l'adaptation de l'unité **1** au formage de récipients de forme ou de capacité différente.

Outre l'insert **13,** chaque dispositif **12** de boxage comprend une platine **16** de forme sensiblement parallélépipédique, sur laquelle l'insert **13** est fixé de manière rigide par l'intermédiaire de trois tiges superposées, à savoir une tige **17** supérieure, une tige **18** inférieure, et une tige centrale **19**, toutes trois ancrées dans une face antérieure de la platine **16**.

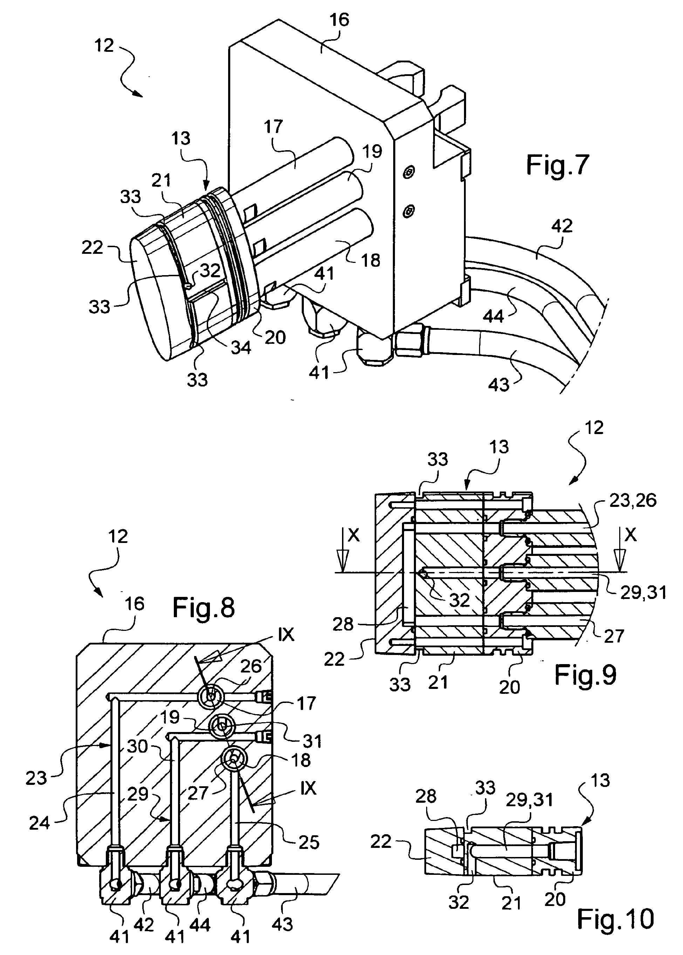

Comme cela est bien visible sur les figures 7, 9 et 10, l'insert **13** est réalisé en trois sections adjacentes, à savoir :
- une section **20** de base, réalisée dans un matériau thermiquement conducteur, c'est-à-dire à forte conductibilité thermique (de préférence un matériau métallique tel qu'un acier ou un alliage d'aluminium) et à laquelle sont raccordées les tiges **17**, **18**, **19** ;
- une section **21** intermédiaire, réalisée dans un matériau thermiquement isolant, c'est-à-dire à faible conductibilité thermique : on aura avantage à utiliser une matière plastique telle que le polyoxyméthylène copolymère (POM-C), connu autant pour ses propriétés d'isolant thermique que pour sa grande résistance mécanique et sa bonne usinabilité ;
- une section d'extrémité ou poinçon **22**, réalisée dans un matériau thermiquement conducteur, de préférence un alliage d'aluminium.

Comme cela est par ailleurs illustré sur les figures 8 et 9, le dispositif **12** de boxage est muni d'un circuit **23** de chauffe du poinçon **22,** qui comprend une canalisation **24** d'amenée de fluide et une canalisation **25** d'évacuation du fluide, percées dans la platine **16** et raccordées à deux alésages **26**, **27** pratiqués respectivement dans la tige **17** supérieure et dans la tige **18** inférieure et traversant en outre la section **20** de base et la section **21** intermédiaire pour déboucher dans le poinçon **22.**

Un conduit **28,** ménagé dans le poinçon **22,** par exemple sous forme d'une gorge creusée dans une face arrière de celui-ci, relie les alésages **26, 27** pour permettre la circulation du fluide et la chauffe du poinçon **22.**

La chauffe du poinçon **22** permet à tout le moins de maintenir la température de l'ébauche **3,** au niveau de ses excroissances **4,** à une valeur élevée (aux environs de la température de transition vitreuse) où la matière est suffisamment malléable pour que le retournement des excroissances **4** soit aisé et que les contraintes exercées sur la matière n'entraîne pas de déformation intempestive du récipient **2**.

Le fluide de chauffe est par exemple de l'eau portée à une température supérieure ou égale à la température de transition vitreuse de la matière constitutive du récipient **2** (soit environ 80°C pour le PET).

En revanche, afin de minimiser les risques de déformation des réserves **5** dues à un refroidissement non contrôlé du récipient **2** en sortie du moule **6**, le dispositif **12** de boxage est muni d'un circuit **29** de refroidissement local de la charnière **14**.

Ce circuit **29** comprend une canalisation **30** d'amenée percée dans la platine, raccordée à un alésage **31** pratiqué dans la tige **19** centrale et traversant en outre la section **20** de base pour aboutir dans la section **21** intermédiaire à proximité de sa jonction avec le poinçon **22**.

La canalisation **30** débouche, par l'intermédiaire d'un perçage **32** transversal, dans une gorge **33** périphérique creusée dans la section **21** intermédiaire au voisinage de sa jonction avec le poinçon **22**.

Comme cela est visible sur la figure 7, la gorge **33** ne constitue pas une boucle fermée, mais une boucle ouverte dont une extrémité amont coïncide avec le perçage **32** et dont une extrémité aval, opposée à l'extrémité amont mais néanmoins physiquement voisine d'elle, débouche dans une rainure **34** longitudinale creusée dans la section **21** intermédiaire, sur toute la longueur de celle-ci.

Le fluide de refroidissement (ou frigorigène) est par exemple de l'air sous pression, et dont la détente, à la sortie de l'insert **13**, s'accompagne d'une chute de température.

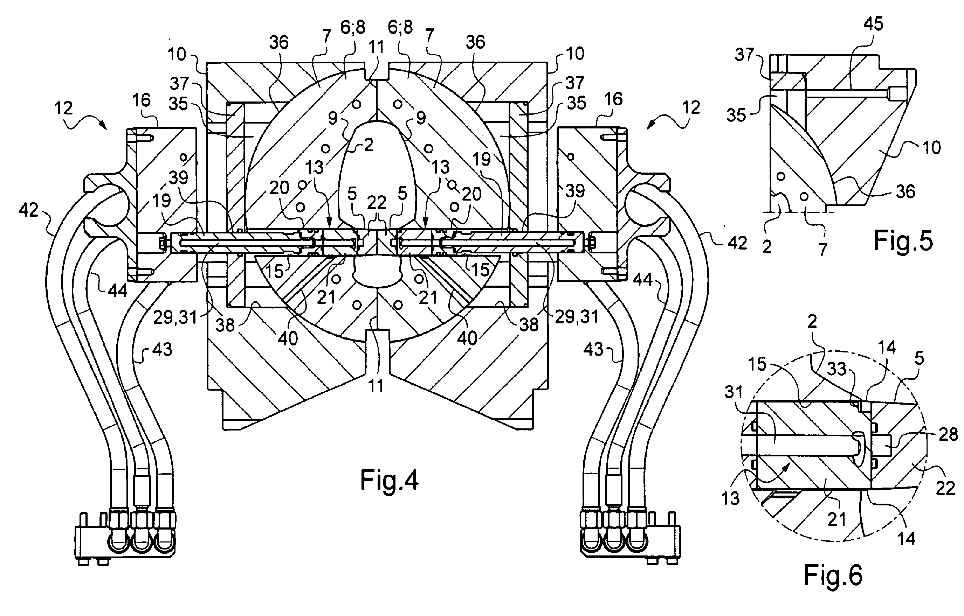

Selon un mode de réalisation préféré, illustré sur les figures 4 et 5, l'évacuation du fluide frigorigène s'effectue par le porte-moule **10,** dans lequel est ménagée, derrière le demi-moule **8,** une chambre **35** de compensation formée par un évidement creusé dans le porte-moule **10** au-delà de l'empreinte cylindrique correspondant à la face **36** arrière du demi-moule **8.**

Cette chambre **35** de compensation est fermée de manière étanche, à l'opposé du demi-moule **8**, par une plaque **37** qui obture une fenêtre **38** pratiquée dans le demi-moule pour permettre l'accès manuel frontal au dispositif **12** de boxage.

Cette plaque **37** comprend trois perçages **39** superposés dans lesquels les tiges **17**, **18**, **19** sont montées coulissantes pour permettre le mouvement de translation du dispositif **12** de boxage. L'étanchéité du passage des tiges **17, 18, 19** au travers des perçages **39** peut être assurée au moyen de joints dynamiques à lèvres montés dans des lamages formés dans la plaque **36** autour de chaque perçage **39.**

La chambre **35** de compensation est délimitée, en regard de la plaque **37**, par la face **36** arrière du porte-moule **8**.

Un perçage **40** oblique pratiqué dans chaque demi-moule **8** relie une zone de l'évidement **15** où se trouve, en fin de boxage, la section **21** intermédiaire, à hauteur de la rainure **34,** à la chambre **35** de compensation, pour permettre l'évacuation vers celle-ci du fluide frigorigène.

Les canalisations **24**, **25**, **30** s'ouvrent sur une face inférieure de la platine **16**. Des raccords **41**, vissés dans les ouvertures des canalisations **24**, **25**, **30**, relient celles-ci respectivement à des tubulures **42**, **43** souples d'amenée et d'évacuation du fluide de chauffe, et à une tubulure **44** souple d'amenée du fluide de refroidissement.

Le gaz sous pression présent dans la chambre **35** de compensation peut être évacué vers l'extérieur via une canalisation **45** percée transversalement dans le porte-moule **10** et débouchant dans la chambre **35**, comme cela est illustré sur la figure 5. Cette canalisation **45** est avantageusement raccordée à un silencieux (non représenté) permettant d'absorber au moins pour partie les bruits dus à la décompression de la chambre **35.**

On peut résumer le procédé de formage des récipients, par mise en oeuvre de l'unité **1** de formage qui vient d'être décrite, de la manière suivante.

Le récipient 3 intermédiaire est d'abord chargé dans le moule **6**, en position ouverte et avec les inserts en position rétractée (figure 2). Le moule **6** est ensuite fermé, les inserts **13** étant maintenus en position rétractée. La forme générale du récipient **3** intermédiaire correspond à la cavité du moule **6**, les excroissances **4** étant toutefois reçues dans les évidements **15** en regard des inserts **13**, à faible distance (ou au contact) des poinçons **22**.

Tandis que la chaleur des poinçons **22** maintient (ou élève) la température de matière des excroissances **4,** on initie alors l'opération de boxage, par laquelle chaque excroissance **4** est repoussée transversalement par la translation de l'insert **13** correspondant pour former, par retournement autour de la charnière **14**, une réserve **5** en creux en saillie vers l'intérieur du récipient **2**.

En position déployée, la gorge **33** périphérique de chaque insert **13** se trouve en regard de la charnière (figure 6).

Une fois achevé le retournement des excroissances (figure 4), on maintient temporairement les inserts **13** en position déployée et on commande l'injection du fluide frigorigène par le circuit **29.**

L'air sous pression débouche alors par le perçage **32** dans la gorge **33**. L'air, guidé par la gorge **33** et la paroi de l'évidement **15**, effectue une circulation périphérique en balayant la charnière **14**. La détente de l'air est accompagnée d'une chute de température qui contribue à refroidir - et donc à rigidifier - la charnière **14.**

Après avoir parcouru la gorge **33**, l'air est canalisé par la rainure **34** puis le perçage **40** vers la chambre **35** de compensation dont il est ensuite extrait via la canalisation **45**, la chambre **35** et la canalisation **45** formant ainsi conjointement un circuit d'évacuation de l'air de refroidissement.

La séparation du circuit **23** de chauffe et du circuit **29** de refroidissement, complétée par l'utilisation d'un matériau thermiquement conducteur pour la réalisation du poinçon **22** (au niveau duquel s'effectue la chauffe) et d'un matériau isolant thermiquement pour la réalisation de la section **21** intermédiaire (au niveau de laquelle s'effectue le balayage - et donc le refroidissement), permet à la fois de garantir une chauffe suffisante (ou un maintien en température) des excroissances 5 lors du boxage, sans toutefois empêcher un refroidissement efficace de la charnière à l'issue de celui-ci.

## Revendications

1. Procédé de formage, dans un moule **(6)** muni d'une paroi **(7)** formant une cavité, d'un récipient **(2)** à partir d'un récipient **(3)** intermédiaire comprenant au moins une excroissance **(4)** latérale en saillie vers l'extérieur du récipient, qui comprend :
- Une opération de boxage consistant à repousser l'excroissance **(4)** latérale pour former, par retournement autour d'une zone **(14)** d'articulation, une réserve **(5)** en creux en saillie vers l'intérieur du récipient **(2) ;**
**Caractérisé en ce qu'**il comprend :
- une opération de refroidissement local consistant, après retournement de l'excroissance (**5**), à balayer ladite zone (**14**) d'articulation au moyen d'une circulation de fluide.

2. Procédé selon la revendication 1, **caractérisé en ce que** le fluide est de l'air.

3. Procédé selon la revendication 1 ou 2, **caractérisé en ce que** l'opération de boxage est accompagnée d'une opération de chauffe de l'excroissance (**4**).

4. Dispositif (**1**) de formage d'un récipient (**2**) à partir d'un récipient (3) intermédiaire comprenant au moins une excroissance (**4**) latérale en saillie vers l'extérieur du récipient, ce dispositif comprenant :
- Un moule (**6**) muni d'une paroi (**7**) définissant une cavité (**9**) ;
- Un insert (**13**) de boxage monté mobile par rapport au moule (**6**) entre une position rétractée dans laquelle l'insert (**13**) est escamoté dans la paroi (**7**), et une position sortie dans laquelle l'insert (**13**) s'étend en saillie par rapport à la paroi (**7**), vers l'intérieur de la cavité (**9**), pour repousser, sur le récipient (**3**) intermédiaire, l'excroissance (**4**) latérale et former, par retournement autour d'une zone (**14**) d'articulation, une réserve (**5**) en creux vers l'intérieur du récipient (**2**) ;
**Caractérisé en ce qu'**il comprend :
- une gorge (**33**) périphérique formée sur l'insert (**13**) et qui, en position sortie de l'insert (**13**), se trouve en regard de ladite zone (**14**) d'articulation ;
- des moyens (**29**) d'injection d'un fluide dans la gorge (**33**) périphérique ;
- des moyens (**35**, **45**) d'extraction du fluide de la gorge (**33**) périphérique.

5. Dispositif (**1**) selon la revendication 4, **caractérisé en ce que** l'insert (**13**) comprend une section (**22**) d'extrémité réalisé dans un matériau thermiquement conducteur et une section (**21**) intermédiaire réalisée dans un matériau thermiquement isolant, et **en ce que** la gorge (**33**) est ménagée dans la section (**21**) intermédiaire.

6. Dispositif selon la revendication 5, **caractérisé en ce que** la gorge (**33**) est réalisée au voisinage d'une jonction entre la section (**21**) intermédiaire et la section (**22**) d'extrémité.

7. Dispositif selon la revendication 5 ou 6, **caractérisé en ce que** la gorge (**33**) est prolongée par une rainure (**34**) longitudinale pratiquée dans la section (**21**) intermédiaire.

8. Dispositif selon l'une des revendications 4 à 7, **caractérisé en ce qu'**il comprend un porte-moule (**10**) auquel est fixé le moule (6), et **en ce qu'**un circuit (**35**, **45**) d'évacuation du fluide est ménagé dans le porte-moule (**10**).

9. Dispositif selon la revendication 8, **caractérisé en ce que** ledit circuit d'évacuation comprend une chambre (**35**) de compensation ménagée dans le porte-moule (**10**) et une canalisation (**45**) ménagée dans le porte-moule et débouchant dans la chambre de compensation (35).

10. Machine de fabrication de récipients, comprenant un dispositif selon l'une des revendications 4 à 9.

## Claims

1. Method for forming, in a mould (6) furnished with a wall (7) forming a cavity, a container (2) from an intermediate container (3) comprising at least one lateral excrescence (4) protruding towards the outside of the container, which comprises:
- a boxing operating consisting in pushing away the lateral excrescence (4) in order to form, by turning over around an articulation zone (14), a hollow reserve element (5) protruding towards the inside of the container (2);
**characterized in that** it comprises:
- a local cooling operation consisting, after turning over the excrescence (5), in washing the said articulation zone (14) by means of a flow of fluid.

2. Method according to Claim 1, **characterized in that** the fluid is air.

3. Method according to Claim 1 or 2, **characterized in that** the boxing operation is accompanied by an operation of heating the excrescence (4).

4. Device (1) for forming a container (2) from an intermediate container (3) comprising at least one lateral excrescence (4) protruding towards the outside of the container, this device comprising:
- a mould (6) furnished with a wall (7) defining a cavity (9);
- a boxing insert (13) mounted so as to be able to move relative to the mould (6) between a retracted position in which the insert (13) is retracted into the wall (7), and a protruding position in which the insert (13) protrudes relative to the wall (7), towards the inside of the cavity (9), in order to push away, on the intermediate container (3), the lateral excrescence (4) and form, by turning over around an articulation zone (14), a hollow reserve element (5) towards the inside of the container (2);
**characterized in that** it comprises:
- a peripheral groove (33) formed on the insert (13) and which, in the protruding position of the insert (13), faces the said articulation zone (14) ;
- means (29) for injecting a fluid into the peripheral groove (33);
- means (35, 45) for extracting the fluid from the peripheral groove (33).

5. Device (1) according to Claim 4, **characterized in that** the insert (13) comprises an end section (22) made of a thermally conductive material and an intermediate section (21) made of a thermally insulating material, and **in that** the groove (33) is arranged in the intermediate section (21).

6. Device according to Claim 5, **characterized in that** the groove (33) is made in the vicinity of a junction between the intermediate section (21) and the end section (22).

7. Device according to Claim 5 or 6, **characterized in that** the groove (33) is extended by a longitudinal channel (34) made in the intermediate section (21).

8. Device according to one of Claims 4 to 7, **characterized in that** it comprises a mould-holder (10) to which the mould (6) is attached, and **in that** a fluid discharge circuit (35, 45) is arranged in the mould-holder (10).

9. Device according to Claim 8, **characterized in that** the said discharge circuit comprises a compensation chamber (35) arranged in the mould-holder (10) and a pipe (45) arranged in the mould-holder and leading into the compensation chamber (35).

10. Machine for manufacturing containers, comprising a device according to one of Claims 4 to 9.

## Patentansprüche

1. Verfahren zum Formen, in einem mit einer einen Hohlraum bildenden Wand (7) versehenen Formwerkzeug (6), eines Behälters (2) ausgehend von einem Zwischenbehälter (3), der mindestens eine seitliche Ausstülpung (4) enthält, die zur Außenseite des Behälters vorsteht, das enthält:
- einen Treibvorgang, der darin besteht, die seitlich Ausstülpung (4) zurückzuschieben, um durch Umkehrung um eine Gelenkzone (14) eine Vertiefung (5) zu formen, die zum Inneren des Behälters (2) vorsteht;
**dadurch gekennzeichnet, dass** es enthält:
- einen lokalen Kühlungsvorgang, der nach dem Umkehren der Ausstülpung (5) darin besteht, die Gelenkzone (14) mittels eines Fluidkreislaufs zu überstreichen.

2. Verfahren nach Anspruch 1, **dadurch gekennzeichnet, dass** das Fluid Luft ist.

3. Verfahren nach Anspruch 1 oder 2, **dadurch gekennzeichnet, dass** der Treibvorgang von einem Heizvorgang der Ausstülpung (4) begleitet wird.

4. Vorrichtung (1) zum Formen eines Behälters (2) ausgehend von einem Zwischenbehälter (3), der mindestens eine seitliche Ausstülpung (4) enthält, die zur Außenseite des Behälters vorsteht, wobei diese Vorrichtung enthält:
- ein Formwerkzeug (6), das mit einer einen Hohlraum (9) definierenden Wand (7) versehen ist;
- einen Treibeinsatz (13), der bezüglich des Formwerkzeugs (6) zwischen einer zurückgezogenen Stellung, in der der Einsatz (13) in die Wand (7) eingezogen ist, und einer Austrittsstellung beweglich montiert ist, in der der Einsatz (13) sich bezüglich der Wand (7) ins Innere des Hohlraums (9) vorstehend erstreckt, um auf dem Zwischenbehälter (3) die seitliche Ausstülpung (4) zurückzuschieben und durch Umkehren um eine Gelenkzone (14) eine Vertiefung (5) zur Innenseite des Behälters (2) zu formen;
**dadurch gekennzeichnet, dass** sie enthält:
- eine Umfangsrille (33), die auf dem Einsatz (13) geformt ist und sich in der Austrittsstellung des Einsatzes (13) gegenüber der Gelenkzone (14) befindet;
- Einrichtungen (29) zum Einspritzen eines Fluids in die Umfangsrille (33);
- Einrichtungen (35, 45) zur Entnahme des Fluids aus der Umfangsrille (33).

5. Vorrichtung (1) nach Anspruch 4, **dadurch gekennzeichnet, dass** der Einsatz (13) einen Endabschnitt (22), der aus einem wärmeleitenden Material hergestellt ist, und einen Zwischenabschnitt (21) enthält, der aus einem wärmeisolierenden Material hergestellt ist, und dass die Rille (33) im Zwischenabschnitt (21) ausgebildet ist.

6. Vorrichtung nach Anspruch 5, **dadurch gekennzeichnet, dass** die Rille (33) in der Nähe einer Verbindung zwischen dem Zwischenabschnitt (21) und dem Endabschnitt (22) hergestellt ist.

7. Vorrichtung nach Anspruch 5 oder 6, **dadurch gekennzeichnet, dass** die Rille (33) von einer Längsnut (34) verlängert wird, die im Zwischenabschnitt (21) hergestellt ist.

8. Vorrichtung nach einem der Ansprüche 4 bis 7, **dadurch gekennzeichnet, dass** sie einen Formwerkzeugträger (10) enthält, an dem das Formwerkzeug (6) befestigt ist, und dass ein Entleerungskreislauf (35, 45) des Fluids im Formwerkzeugträger (10) ausgebildet ist.

9. Vorrichtung nach Anspruch 8, **dadurch gekennzeichnet, dass** der Entleerungskreislauf eine im Formwerkzeugträger (10) ausgebildete Ausgleichskammer (35) und eine Rohrleitung (45) enthält, die im Formwerkzeugträger ausgebildet ist und in die Ausgleichskammer (35) mündet.

10. Maschine zur Herstellung von Behältern, die eine Vorrichtung nach einem der Ansprüche 4 bis 9 enthält.
